# EUROPÄISCHE PATENTSCHRIFT

(11) **EP 3 625 073 B1**
(45) Veröffentlichungstag und Bekanntmachung des Hinweises auf die Patenterteilung: **10.03.2021**
(21) Anmeldenummer: 18726382.7
(22) Anmeldetag: 14.05.2018
(51) Int. Cl.: B60K 7/00, B60K 17/02, B60K 17/04, B60K 17/24, B60K 17/08, B60K 1/00

(54) **ANTRIEBSMODUL FÜR EIN KRAFTFAHRZEUG**
DRIVE MODULE FOR A MOTOR VEHICLE
MODULE D'ENTRAÎNEMENT POUR VÉHICULE À MOTEUR

(30) Priorität: 20.05.2017 DE 102017004930
(43) Veröffentlichungstag der Anmeldung: 25.03.2020
(73) Patentinhaber: Daimler AG, 70372 Stuttgart (DE)
(72) Erfinder: SCHILDER, Tobias, 70794 Filderstadt (DE); RIEDL, Klaus, 72074 Tübingen (DE)
(74) Vertreter: JENSEN & SON
(86) Internationale Anmeldenummer: PCT/EP2018/062342
(87) Internationale Veröffentlichungsnummer: WO 2018/215228

(56) Entgegenhaltungen:
- CN-A- 101 704 340
- DE-T5-112013 002 081
- FR-A1- 2 693 527

## Beschreibung

Die Erfindung betrifft ein Antriebsmodul für ein Kraftfahrzeug und ein Kraftfahrzeug mit dem Antriebsmodul.

Aus der DE 10 2013 102 161 A1 ist bereits ein Antriebsmodul für ein Kraftfahrzeug bekannt, mit zumindest einer Antriebsmaschine, mit einer mit der Antriebsmaschine gekoppelten Antriebswelle, mit einem drehfest auf der Antriebswelle angeordneten Antriebszahnrad, mit einer Abtriebswelle, mit einem drehfest auf der Abtriebswelle angeordneten Abtriebszahnrad, mit einem Teilgetriebe, das eine Stirnradverzahnung aufweist, über welche das Teilgetriebe an das Antriebszahnrad angebunden ist, und mit einem ersten Gehäuseteil, das eine erste Lagerstelle zu einer Lagerung der Abtriebswelle aufweist.

Aus der DE 10 2012 010 170 A1 ist ferner Antriebsmodul für ein Kraftfahrzeug bekannt, mit einer mit einer Antriebsmaschine gekoppelten Antriebswelle, mit einem auf der Antriebswelle angeordneten Antriebszahnrad, mit einer Abtriebswelle, mit einem auf der Abtriebswelle angeordneten Abtriebszahnrad, mit einem Teilgetriebe, das eine Stirnradverzahnung aufweist, über welche das Teilgetriebe an das Antriebszahnrad angebunden ist, und mit einem ersten Gehäuseteil, das eine erste Lagerstelle zu einer Lagerung der Abtriebswelle aufweist, und mit einem von dem ersten Gehäuseteil getrennt ausgebildeten Gehäusedeckel, welcher eine zweite Lagerstelle zu einer Lagerung der Abtriebswelle aufweist.

Schließlich ist aus der gattungsgemäßen DE 11 2013 002 081 T5 ein derartiges Antriebsmodul bekannt.

Es ist ferner bekannt, dass Kraftfahrzeugantriebe, welche einen Verbrennungsmotor umfassen, ein Getriebe mit üblicherweise mehr als 5 schaltbaren Gängen benötigen. Dagegen benötigt ein reines Elektrofahrzeug je nach Größe, Gewicht und Einsatzzweck kein schaltbares Getriebe oder aber ein schaltbares Getriebe mit lediglich zwei oder drei schaltbaren Gängen. Für die Hersteller von Kraftfahrzeugantriebsmodulen steigt somit die Vielfalt an geforderten Getriebevarianten für Antriebssysteme.

Es besteht daher die Aufgabe, Antriebssysteme möglichst modular und möglichst so zu konzipieren, dass einzelne Teilmodule in unterschiedlichen Fahrzeugarten als Gleichteile verwendet werden können. Die Aufgabe wird durch ein Antriebsmodul gemäß Anspruch 1 sowie durch ein Kraftfahrzeug gemäß Anspruch 10 gelöst. Weiterbildungen der Erfindung ergeben sich aus den abhängigen Ansprüchen.

Die Erfindung geht aus von einem Antriebsmodul für ein Kraftfahrzeug, mit zumindest einer elektrischen Antriebsmaschine, mit einer permanent drehfest mit einem Rotor der elektrischen Antriebsmaschine gekoppelten Antriebswelle, mit einem drehfest auf der Antriebswelle angeordneten Antriebszahnrad, mit einer Abtriebswelle, mit einem koaxial zu der Abtriebswelle angeordneten Abtriebszahnrad, mit einem koaxial zu der Abtriebswelle angeordneten Teilgetriebe, das eine koaxial zu der Abtriebswelle angeordnete Stirnradverzahnung aufweist, welche mit dem Antriebszahnrad in Eingriff steht, und mit einem ersten Gehäuseteil, das eine erste Lagerstelle zu einer Lagerung der Abtriebswelle aufweist, und mit einem von dem ersten Gehäuseteil getrennt ausgebildeten Gehäusedeckel, welcher eine zweite Lagerstelle zu einer Lagerung der Abtriebswelle aufweist.

Es wird ferner davon ausgegangen, dass der Gehäusedeckel eine Öffnung in dem ersten Gehäuseteil vollständig abdeckt, wobei erfindungsgemäß vorgeschlagen wird, dass die Öffnung einen um die Drehachse der Abtriebswelle koaxial angeordneten kreisförmigen freien Bereich aufweist und sich der kreisförmige freie Bereich konzentrisch um eine Drehachse der Abtriebswelle erstreckt und ein Öffnungsradius der Öffnung um die Drehachse größer ist als ein maximaler Radius des Teilgetriebes um die Drehachse, jedoch nicht mehr als doppelt so groß wie der maximale Radius des Teilgetriebes.

Weiterhin erfindungsgemäß ist vorgesehen, dass das Antriebsmodul eine Bremse aufweist, welche zwischen dem Teilgetriebe und dem Gehäusedeckel angeordnet ist. Vorzugsweise ist die Bremse auf einem inneren Durchmesser des Teilgetriebes angeordnet. Dadurch kann insbesondere eine vorteilhafte Schaltbarkeit des Teilgetriebes erreicht werden. Ferner kann durch die Anordnung der Bremse insbesondere eine vorteilhafte Zugänglichkeit der Kupplung, insbesondere für eine Ansteuerung, bereitgestellt werden. Unter einer "Bremse" soll in diesem Zusammenhang insbesondere eine Schalteinheit verstanden werden, die wirkungsmäßig zwischen dem Teilgetriebe, insbesondere einem Planetenradsatz des Teilgetriebes, und einem Getriebegehäuse, bevorzugt zwischen zumindest einem Getriebeelement des Planetenradsatzes des Teilgetriebes und dem Getriebegehäuse, angeordnet ist und die dazu vorgesehen ist, ihr drehbares Kopplungselement, das in einem geöffneten Zustand unabhängig von dem Getriebegehäuse verdrehbar ist, in einem geschlossenen Zustand mit ihrem drehfest mit dem Getriebegehäuse verbundenen Kopplungselement drehfest zu verbinden. Vorzugsweise ist das drehbare Kopplungselement permanent drehfest mit dem Getriebeelement des Planetenradsatzes verbunden.

Aufgrund der erfindungsgemäßen Ausgestaltung des Antriebsmoduls kann folgendes modulares Konzept realisiert werden: Ein erstes Modul, bestehend aus dem ersten Gehäuseteil, der elektrischen Maschine, der Antriebswelle und eventuell dem Antriebszahnrad kann, an sich unverändert, mit unterschiedlichen Getriebemodulen kombiniert werden. Als Getriebemodul wird ein Modul, aufweisend das Teilgetriebe und, eventuell, den Gehäusedeckel oder einen Teil des Gehäusedeckels, aufgefasst. Unterschiedliche Teilgetriebe sowie die Abtriebswelle können durch die Öffnung in dem ersten Gehäuseteil montiert werden, und die Öffnung kann mit dem standardisierten oder teilweise standardisierten Gehäusedeckel verschlossen werden.
Da die Öffnung nur so groß sein muss, dass vor allem das Teilgetriebe (vorzugweise inklusive das Abtriebszahnrad) und die Abtriebswelle in axialer Richtung eingeführt werden können, genügt eine Öffnung, die nur wenig größer ist als ein Durchmesser des Teilgetriebes. Somit kann auch der Deckel verhältnismäßig klein und damit kostengünstig ausgeführt werden.

Dass sich die Öffnung "im Wesentlichen konzentrisch" um die Drehachse der Abtriebswelle erstrecken soll, bedeutet, dass eine Begrenzung der Öffnung in dem ersten Gehäuseteil nicht exakt kreisförmig sein muss. Die Öffnung muss jedoch zumindest einen um die Drehachse der Abtriebswelle koaxial angeordneten kreisförmigen freien Bereich aufweisen, so dass das Teilgetriebe und vorzugsweise auch das Abtriebszahnrad in axialer Richtung durch die Öffnung montiert und/oder demontiert werden können.

Vorzugsweise ist die Begrenzung der Öffnung im Wesentlichen in einer Ebene angeordnet. Mit anderen Worten ist ein Bereich des ersten Gehäuseteils, in dem die Öffnung angeordnet ist, vorzugsweise im Wesentlichen eben ausgebildet.

Vorzugsweise kann die Antriebswelle sowohl direkt als auch indirekt mit der Antriebsmaschine gekoppelt sein. Bevorzugt ist die Antriebswelle direkt mit einem Rotor der Antriebsmaschine gekoppelt. Vorzugsweise ist der Gehäusedeckel zu einem Verschließen der Öffnung des Gehäuseteils vorgesehen. Bevorzugt bilden das Gehäuseteil und der Gehäusedeckel zumindest einen Teil eines Gehäuses, vorzugsweise das gesamte Gehäuse, des Antriebsmoduls aus. Bevorzugt ist die zweite Lagerstelle zu einer Lagerung der Abtriebswelle auf einer der ersten Lagerstelle gegenüberliegenden Seite der Abtriebswelle vorgesehen.

Durch die erfindungsgemäße Ausgestaltung kann insbesondere ein vorteilhaft modulares Antriebsmodul bereitgestellt werden. Es kann insbesondere ein vorteilhaft modularer Getriebebaukasten realisiert werden. Bevorzugt kann erreicht werden, dass lediglich Einzelteile des Antriebsmoduls geändert werden müssen um zwischen einer Mehrgängigkeit und einer Eingängigkeit zu wechseln. Hierdurch können verschiedene Szenarien abgedeckt werden. Beispielsweise wäre denkbar, dass ein "normales" Fahrzeug ein kostengünstiges 1-Gang-System erhält, während größere Fahrzeuge oder Fahrzeuge mit einer Anhängerkupplung ein Mehrgangsystem erhalten. Besonders eignet sich das Konzept für einen Elektroantrieb für ein rein elektrisch angetriebenes Kraftfahrzeug und für eine rein elektrische Antriebsachse in einem insgesamt mit Hybridantrieb ausgestatteten Fahrzeug.

Ferner soll in diesem Zusammenhang unter einer "Antriebswelle" insbesondere eine antriebsseitige Welle verstanden werden, welche direkt oder indirekt, vorzugsweise permanent, mit der Antriebsmaschine verbunden ist. Vorzugsweise ist die Antriebswelle antriebsseitig von einem Getriebe, insbesondere dem Teilgetriebe, angeordnet. Des Weiteren soll in diesem Zusammenhang unter einer "Abtriebswelle" insbesondere eine abtriebsseitige Welle verstanden werden, welche direkt oder indirekt, vorzugsweise permanent, mit einem Achsgetriebe des Antriebsmoduls verbunden ist. Vorzugsweise ist die Abtriebswelle abtriebsseitig von einem Getriebe, insbesondere dem Teilgetriebe, angeordnet. Die Abtriebswelle kann sowohl einteilig als auch mehrteilig ausgebildet sein. Es wäre insbesondere denkbar, dass die Abtriebswelle zumindest teilweise mittels dem Teilgetriebe verlängert wird. Unter einem "Teilgetriebe" soll in diesem Zusammenhang insbesondere ein Getriebe oder zumindest ein Teil eines Getriebes verstanden werden, welches zu einer Bereitstellung zumindest einer Übersetzung vorgesehen ist. Vorzugsweise ist das Teilgetriebe von einem fertigen, insbesondere vormontierten Modul gebildet. Bevorzugt liegt das Teilgetriebe insbesondere in verschiedenen Ausführungen vor. Besonders bevorzugt ist das Teilgetriebe zu einem Einbau in einem fertig montierten Zustand vorgesehen. Vorzugsweise ist das Teilgetriebe zu einer Bereitstellung einer wesentlichen Übersetzung innerhalb des Antriebsmoduls, insbesondere von der Antriebswelle auf die Abtriebswelle, vorgesehen. Ferner soll in diesem Zusammenhang unter einem "Gehäuseteil" insbesondere zumindest ein Teil eines Gehäuses, wie insbesondere eine Gehäuseschale und/oder ein Teilgehäuse, verstanden werden, welches zumindest einen Teil des Antriebsmoduls umgreift. Vorzugsweise ist das Gehäuseteil zu einem Schutz und/oder zu einer Lagerung zumindest eines Teils des Antriebsmoduls vorgesehen.

Unter einer drehfesten Verbindung oder drehfeste Kopplung zweier Elemente soll verstanden werden, dass die beiden Elemente koaxial angeordnet und derart miteinander verbunden sind, dass sie immer mit der gleichen Winkelgeschwindigkeit um eine Drehachse drehen.

Mit dem maximalen Radius des Teilgetriebes ist der Radius des Teilgetriebes an der Stelle der maximalen radialen Ausdehnung des Teilgetriebes gemeint.

Besonders bevorzugt ist die Stirnradverzahnung des Teilgetriebes diejenige Stelle, die den maximalen Radius des Teilgetriebes aufweist. Mit anderen Worten ist besonders bevorzugt der Außenradius der Stirnradverzahnung gleich dem maximalen Radius des Teilgetriebes.

Es wird also vorgeschlagen, dass das erste Gehäuseteil eine Öffnung aufweist, dessen Öffnungsdurchmesser, senkrecht zu einer Drehachse der Abtriebswelle betrachtet, größer ist als ein Durchmesser des Teilgetriebes. Vorzugsweise ist ein minimaler Öffnungsdurchmesser der Öffnung des Gehäuseteils größer als ein maximaler Durchmesser des Teilgetriebes in radialer Richtung. Bevorzugt passt das Teilgetriebe durch die Öffnung des Gehäuseteils. Dabei ist insbesondere denkbar, dass das Teilgetriebe sowohl lediglich in einer definierten Drehlage als auch in jeder beliebigen Drehlage durch die Öffnung des Gehäuseteils passt. Vorzugsweise ist das Gehäuseteil abgesehen von der Öffnung im Wesentlichen geschlossen. Bevorzugt beträgt ein maximaler Durchmesser des Teilgetriebes in radialer Richtung mindestens 40%, vorzugsweise zumindest 60% und besonders bevorzugt zumindest 80% des minimalen Öffnungsdurchmessers der Öffnung des Gehäuseteils. Dadurch kann vorteilhaft eine Montage des Teilgetriebes durch die Öffnung des Gehäuseteils und in einer Richtung der Drehachse der Abtriebswelle erfolgen. Hierdurch kann insbesondere erreicht werden, dass das Teilgetriebe vorteilhaft spät in einem Montageprozess eingesetzt werden kann. Hierdurch kann insbesondere ein modulares Einsetzen des Teilgetriebes ermöglicht werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Des Weiteren soll in diesem Zusammenhang unter einem "Achsgetriebe" insbesondere ein Getriebe eines Kraftfahrzeugs verstanden werden, welches dazu vorgesehen ist, eine Kraft einer Antriebsmaschine des Kraftfahrzeugs auf die Achse der Antriebsräder des Kraftfahrzeugs zu übertragen. Vorzugsweise ist das Achsgetriebe dazu vorgesehen, eine Kraft von dem Getriebe, insbesondere von dem Teilgetriebe, auf die Wellen der Antriebsräder des Kraftfahrzeugs zu übertragen.

Ferner wird vorgeschlagen, dass die Abtriebswelle zumindest eine Steckverzahnung zu einer drehfesten Anbindung des Teilgetriebes an die Abtriebswelle aufweist. Bevorzugt ist die Steckverzahnung zu einer drehfesten Anbindung zumindest einer Welle und/oder zumindest eines Getriebeelements des Teilgetriebes an die Abtriebswelle vorgesehen. Vorzugsweise ist das Teilgetriebe zumindest teilweise dazu vorgesehen, auf die Steckverzahnung der Abtriebswelle aufgesteckt zu werden. Bevorzugt weist das Teilgetriebe dazu insbesondere zumindest eine Welle mit einer korrespondierenden Steckverzahnung auf. Insbesondere kann grundsätzlich sowohl die Abtriebswelle als auch das Teilgetriebe mit einer Innensteckverzahnung oder mit einer Außensteckverzahnung versehen sein. Grundsätzlich sind auch andere, einem als sinnvoll erscheinende Verbindungen zwischen der Abtriebswelle und dem Teilgetriebe denkbar. Dadurch kann insbesondere eine vorteilhaft einfache und schnelle Montage des Teilgetriebes ermöglicht werden. Es kann insbesondere ein vorteilhaft schneller Ein- und/oder Ausbau des Teilgetriebes erreicht werden. Ferner kann dadurch insbesondere eine zuverlässige Verbindung zwischen dem Teilgetriebe und der Abtriebswelle bereitgestellt werden. Eine mögliche Baugruppenwahl mit einer einheitlichen Stirnradwelle kann über die Steckverzahnung auf dieser gelöst werden. Damit kann wahlweise ein 1-Gang oder ein Mehrgang dargestellt werden. Hierbei ist die Stirnradwelle auf der einen Seite im Gehäusedeckel gelagert. Im Falle des Mehrgangmoduls wird dieses wiederum insbesondere auf dieser gelagert. Durch Einsatz eines Mehrganggetriebes integriert bzw. angeschlossen an eine Stirnradstufe kann dort eine Mehrgängigkeit erzeugt werden. Durch eine entsprechende Ausgestaltung der Anschlüsse, insbesondere als Steckverzahnung, können alle Bauteile erhalten werden. Damit kann mit der Grundarchitektur eine kostengünstige 1-Gang- und eine variable Mehrgangstruktur erstellt werden.

Es wird weiter vorgeschlagen, dass ein radialer Abstand einer Verzahnung des Antriebszahnrads zu der Abtriebswelle maximal einem halben Öffnungsdurchmesser der Öffnung des Gehäuseteils entspricht. Dadurch kann vorteilhaft eine Montage des Teilgetriebes durch die Öffnung des Gehäuseteils erfolgen. Hierdurch kann insbesondere erreicht werden, dass das Teilgetriebe vorteilhaft spät in einem Montageprozess eingesetzt werden kann. Hierdurch kann insbesondere ein modulares Einsetzen des Teilgetriebes ermöglicht werden.

Ferner wird vorgeschlagen, dass das Teilgetriebe ein Planetengetriebe aufweist. Vorzugweise weist das Teilgetriebe zumindest einen Planetenradsatz auf. Besonders bevorzugt ist das Teilgetriebe von einem Planetengetriebe gebildet. Dadurch kann insbesondere ein vorteilhaftes Teilgetriebe bereitgestellt werden. Es kann insbesondere eine Mehrgängigkeit erreicht werden. Bei der Verwendung eines Teilgetriebes, welches ein Planetengetriebe aufweist, kann insbesondere ein vorteilhaft kompaktes Mehrgangsystem bereitgestellt werden. Unter einem "Planetengetriebe" soll insbesondere ein Getriebe verstanden werden, das wenigstens ein mit einem Planetenträger verbundenes Planetenrad aufweist, das in radiale Richtung nach außen mit einem Hohlrad und in radialer Richtung nach innen mit einem Sonnenrad gekoppelt ist. Unter einem "Planetenradsatz" soll dabei insbesondere eine Einheit mit einem Sonnenrad, einem Hohlrad und mit zumindest einem von einem Planetenradträger auf einer Kreisbahn um das Sonnenrad geführten Planetenrad verstanden werden. Vorteilhafterweise weist der Planetenradsatz genau ein Standübersetzungsverhältnis auf.

Des Weiteren wird vorgeschlagen, dass das Antriebsmodul eine Kupplung aufweist, welche zwischen dem Teilgetriebe und dem Gehäusedeckel angeordnet ist. Vorzugsweise ist die Kupplung auf einem äußeren Durchmesser des Teilgetriebes angeordnet. Dadurch kann insbesondere eine vorteilhafte Schaltbarkeit des Teilgetriebes erreicht werden. Ferner kann durch die Anordnung der Kupplung insbesondere eine vorteilhafte Zugänglichkeit der Kupplung, insbesondere für eine Ansteuerung, bereitgestellt werden. Unter einer "Kupplung" soll in diesem Zusammenhang insbesondere eine Schalteinheit verstanden werden, die in einem Leistungsfluss zwischen zumindest zwei Getriebeelementen, insbesondere zwischen zumindest zwei Getriebeelementen des Planetenradsatzes, oder zwischen zumindest zwei Planetenradsätzen des Teilgetriebes angeordnet ist und die dazu vorgesehen ist, ihre zwei drehbar angeordneten Kopplungselemente, die in einem geöffneten Zustand unabhängig voneinander verdrehbar sind, in einem geschlossenen Zustand drehfest miteinander zu verbinden. Vorzugsweise ist jedes Kopplungselement mit jeweils einem Getriebeelement des Teilgetriebes permanent drehfest verbunden.

Weiter wird vorgeschlagen, dass das erste Gehäuseteil eine dritte Lagerstelle aufweist, welche zu einer Lagerung des Antriebszahnrades vorgesehen ist und welche benachbart zu der Öffnung angeordnet ist. Insgesamt ergibt sich dadurch eine kompakte Bauweise des Antriebsmoduls.

Es wird weiter vorgeschlagen, dass das Antriebsmodul ein weiteres an dem Gehäusedeckel angeordnetes Gehäuseteil aufweist, welches zu einer Aufnahme einer Aktuatorik für die Kupplung und/oder die Bremse vorgesehen ist. Vorzugsweise ist der Aktuator über das weitere Gehäuseteil mit dem Gehäusedeckel verbunden. Bevorzugt ist das weitere Gehäuseteil zu einer Aufnahme eines Aktuators für die Kupplung und eines Aktuators für die Bremse vorgesehen ist. Bei der Ausführung als Mehrgang, wird zur Ansteuerung der Schaltelemente, insbesondere der Bremse und der Kupplung, eine Aktuatorik und/oder eine gezielte Ölversorgung notwendig. Bei Ausgestaltung des Mehrgangmoduls kann diese direkt in die Baugruppe integriert werden, sodass diese modular austauschbar ist. Die Aktuatorik zur Erzeugung bzw. Durchleitung der Schaltkräfte zu den Schaltelementen ist fest mit dem Gehäusedeckel des Mehrgangmoduls verbunden. Bei einer durchgesteckten Stirnradwelle findet die Lagerung derselbigen zum Teil in diesem Gehäusedeckel statt. Dadurch kann der Aktuator insbesondere vorteilhaft zugänglich angeordnet werden.

Die Begriffe "axial" und "radial" sind in diesem Zusammenhang insbesondere auf eine Hauptrotationsachse des Antriebsmoduls, insbesondere auf eine Rotationsachse der Abtriebswelle und/oder der Antriebswelle, bezogen, sodass der Ausdruck "axial" insbesondere eine Richtung bezeichnet, die parallel oder koaxial zu der Hauptrotationsachse verläuft. Ferner bezeichnet der Ausdruck "radial" im Folgenden insbesondere eine Richtung, die senkrecht zu der Hauptrotationsachse verläuft.

Weitere Vorteile ergeben sich aus der folgenden Figurenbeschreibung. In den Figuren sind vier Ausführungsbeispiele der Erfindung dargestellt. Die Figuren, die Figurenbeschreibung und die Ansprüche enthalten zahlreiche Merkmale in Kombination.

Dabei zeigen:
- Fig. 1: eine schematische Darstellung eines Kraftfahrzeugs mit einem erfindungsgemäßen Antriebsmodul in einer schematischen Darstellung,
- Fig. 2: einen Teilausschnitt des erfindungsgemäßen Antriebsmoduls mit einer Antriebswelle, mit einer Abtriebswelle, mit einem ersten modularen Teilgetriebe und mit einem zweiten, alternativen modularen Teilgetriebe in einem Montagezustand in einer schematischen Darstellung,
- Fig. 3: einen Teilausschnitt des erfindungsgemäßen Antriebsmoduls mit dem ersten modularen Teilgetriebe in einem montierten Zustand in einer schematischen Darstellung,
- Fig. 4: einen Teilausschnitt des erfindungsgemäßen Antriebsmoduls mit dem zweiten, vereinfacht dargestellten alternativen modularen Teilgetriebe in einem montierten Zustand in einer schematischen Darstellung,
- Fig. 5: das erfindungsgemäße Antriebsmodul mit einer Antriebsmaschine und mit dem zweiten, alternativen modularen Teilgetriebe in einer schematischen Darstellung,
- Fig. 6: das erfindungsgemäße Antriebsmodul mit der Antriebsmaschine und mit dem zweiten, alternativen modularen Teilgetriebe, welches den Planetenradsatz umfasst, in einer schematischen Darstellung,
- Fig. 7: ein alternatives erfindungsgemäßes Antriebsmodul mit einer Antriebsmaschine und mit einem zweiten, alternativen modularen Teilgetriebe, welches einen Planetenradsatz umfasst, in einer schematischen Darstellung,
- Fig. 8: einen Teilausschnitt eines weiteren alternativen, erfindungsgemäßen Antriebsmoduls mit einer Antriebswelle, mit einer Abtriebswelle, mit einem ersten modularen Teilgetriebe und mit einem zweiten, alternativen modularen Teilgetriebe in einem Montagezustand in einer schematischen Darstellung und
- Fig. 9: einen Teilausschnitt eines weiteren alternativen, erfindungsgemäßen Antriebsmoduls mit einer Antriebswelle, mit einer Abtriebswelle, mit einem ersten modularen Teilgetriebe und mit einem zweiten, alternativen modularen Teilgetriebe in einem Montagezustand in einer schematischen Darstellung.

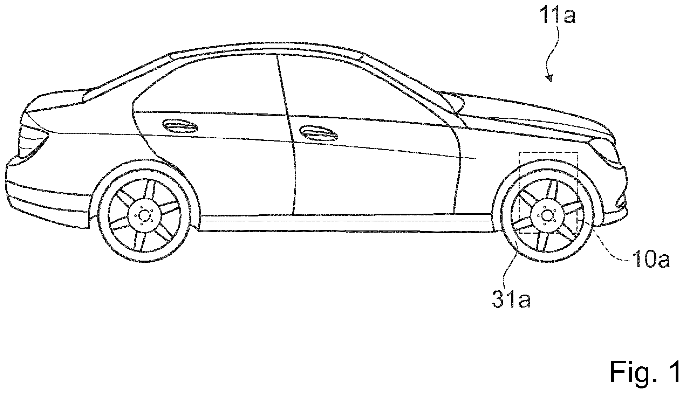

Die Figur 1 zeigt schematisch ein Kraftfahrzeug 11a. Das Kraftfahrzeug 11a ist beispielhaft von einem Elektro-Kraftfahrzeug gebildet. Das Kraftfahrzeug 11a ist von einem frontgetriebenen, elektrisch angetriebenen Kraftfahrzeug 11a gebildet. Das Kraftfahrzeug 11a umfasst ein Antriebsmodul 10a, über welches nicht weiter sichtbar Antriebsräder 31a des Kraftfahrzeugs 11a angetrieben werden.

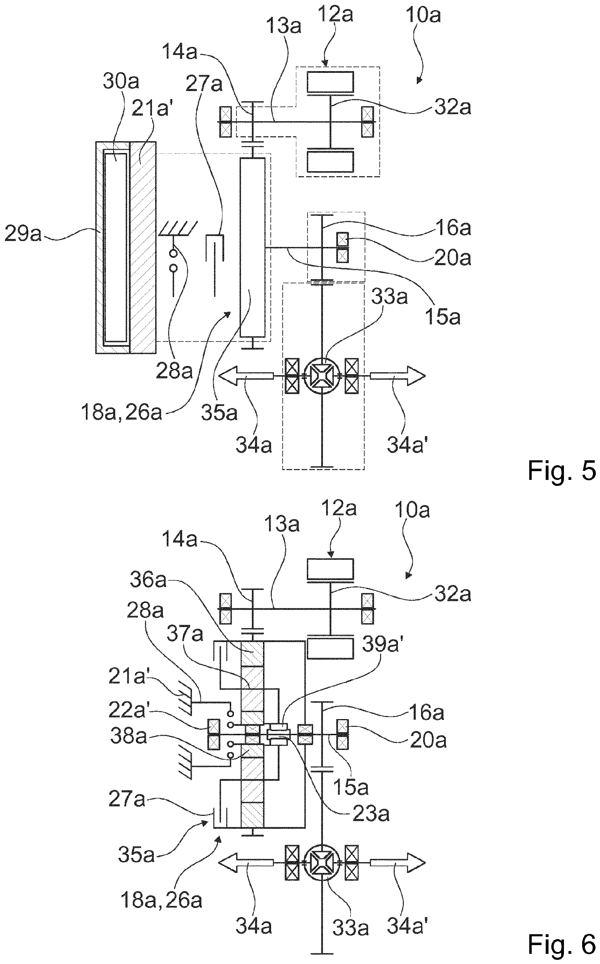

Das Antriebsmodul 10a ist für eine Nutzung in dem Kraftfahrzeug 11a vorgesehen. Das Antriebsmodul 10a ist von einem Kraftfahrzeugantriebsmodul gebildet. Das Antriebsmodul 10a ist von einem EV-Antriebsmodul, also von einem Antriebsmodul 10a für Elektroautos gebildet. Das Antriebsmodul 10a weist eine Antriebsmaschine 12a auf. Die Antriebsmaschine 12a ist von einem Elektromotor gebildet. Grundsätzlich wäre jedoch auch eine andere, einem Fachmann als sinnvoll erscheinende Ausgestaltung der Antriebsmaschine 12a denkbar. Die Antriebsmaschine 12a ist mit einem nicht weiter sichtbaren Energiespeicher, insbesondere einem Akkumulator, des Kraftfahrzeugs 11a verbunden. Die Antriebsmaschine 12a wird von dem Energiespeicher des Kraftfahrzeugs 11a mit Energie versorgt (Figur 5, 6).

Ferner weist das Antriebsmodul 10a eine mit der Antriebsmaschine 12a gekoppelte Antriebswelle 13a auf. Die Antriebswelle 13a ist direkt mit der Antriebsmaschine 12a gekoppelt. Die Antriebswelle 13a ist drehfest, insbesondere permanent drehfest, mit einem Rotor 32a der Antriebsmaschine 12a verbunden. Die Antriebswelle 13a ist beidseitig gelagert ausgeführt. Das Antriebsmodul 10a weist ferner ein drehfest auf der Antriebswelle 13a angeordnetes Antriebszahnrad 14a auf. Das Antriebszahnrad 14a ist permanent drehfest mit der Antriebswelle 13a verbunden.

Des Weiteren weist das Antriebsmodul 10a eine Abtriebswelle 15a auf. Die Abtriebswelle 15a ist beidseitig gelagert ausgeführt. Das Antriebsmodul 10a weist ferner ein drehfest auf der Abtriebswelle 15a angeordnetes Abtriebszahnrad 16a auf. Über das Abtriebszahnrad 16a ist die Abtriebswelle 15a mit einem Achsgetriebe 33a des Antriebsmoduls 10a verbunden. Das Abtriebszahnrad 16a kämmt mit einem Stirnrad des Achsgetriebes 33a. Das Achsgetriebe 33a ist abtriebsseitig mit der Abtriebswelle 15a gekoppelt. Das Achsgetriebe 44a ist dazu vorgesehen, eine von der Antriebsmaschine 12a übertragene Kraft auf Seitenwellen 34a, 34a' der Antriebsräder 31a des Kraftfahrzeugs 11a zu übertragen. Die Seitenwellen 34a, 34a' sind direkt mit den Antriebsrädern 31a verbunden. Das Achsgetriebe 33a ist beispielsweise von einem Differentialgetriebe gebildet (Figur 5, 6).

Das Antriebsmodul 10a weist ferner einen ersten Gehäuseteil 19a auf. Das Gehäuseteil 19a bildet einen wesentlichen Teil eines Gehäuses des Antriebsmoduls 10a. Das Gehäuseteil 19a weist eine erste Lagerstelle 20a zu einer Lagerung der Abtriebswelle 15a auf. Die Lagerstelle 20a umfasst beispielsweise ein Wälzlager zu einer drehbaren Aufnahme der Abtriebswelle 15a. Die Abtriebswelle 15a ist drehbar in dem Gehäuseteil 19a aufgenommen. Ferner weist das Antriebsmodul 10a einen von dem ersten Gehäuseteil 19a getrennt ausgebildeten Gehäusedeckel 21a, 21a' auf. Der Gehäusedeckel 21a, 21a' weist eine zweite Lagerstelle 22a zu einer Lagerung der Abtriebswelle 15a auf. Der Gehäusedeckel 21a, 21a' verschließt in einem montierten Zustand eine Öffnung 24a des Gehäuseteils 19a. Der Gehäusedeckel 21a, 21a' und das Gehäuseteil 19a bilden gemeinsam das Gehäuse des Antriebsmoduls 10a aus.

Anders als in den Figuren gezeigt kann der Gehäusedeckel 21a, 21a' auch vorteilhaft eine Lagerstelle zu einer Lagerung der Antriebswelle 13a aufweisen.

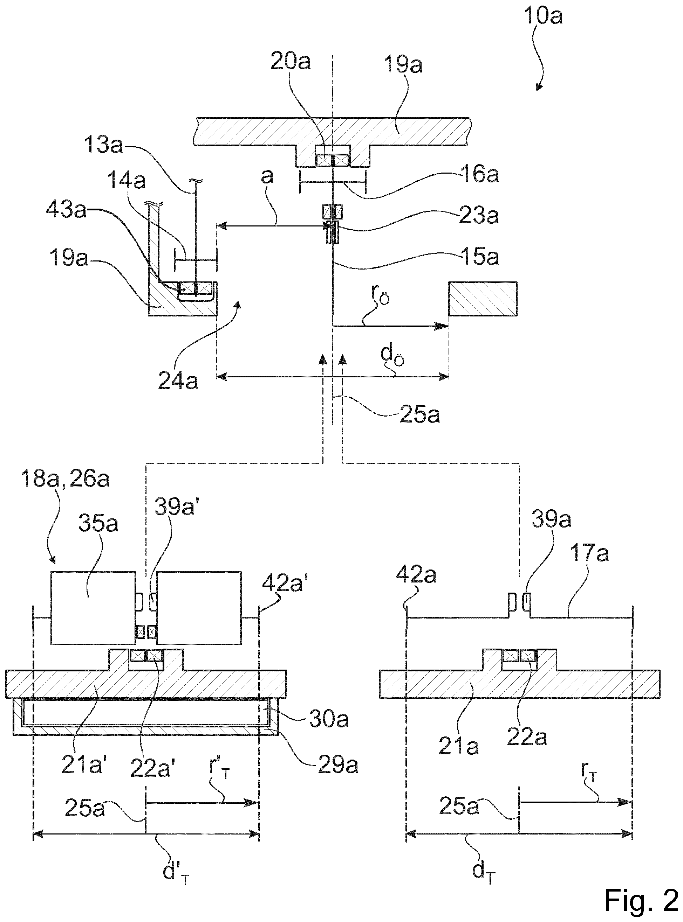

Das Antriebsmodul 10a weist ferner zumindest ein Teilgetriebe 17a, 18a auf. Das Antriebsmodul 10a weist zwei alternative Teilgetriebe 17a, 18a auf. Die Teilgetriebe 17a, 18a sind modular ausgebildet. Es sind daher verschiedene, insbesondere zumindest zwei verschiedene, Teilgetriebe 17a, 18a verwendbar, welche identisch in das Antriebsmodul 10a eingesetzt werden können. In diesem Ausführungsbeispiel werden bespielhaft zwei verschiedene Teilgetriebe 17a, 18a beschrieben. Das erste Teilgetriebe 17a ist von einem 1-Gang-Teilgetriebe gebildet. Das zweite Teilgetriebe 18a ist von einem Mehrgang-Teilgetriebe gebildet. Abhängig von den Anforderungen des Kraftfahrzeugs 11a und/oder abhängig von einem Kundenwunsch kann daher das erste Teilgetriebe 17a oder das zweite Teilgetriebe 18a verbaut werden. Beispielsweise wäre denkbar, dass ein "normales" Fahrzeug ein kostengünstigeres erstes Teilgetriebe 17a, welches als 1-Gang-Teilgetriebe ausgebildet ist, erhält, während "spezielle" Fahrzeuge, wie beispielsweise mit einer Anhängerkupplung, das zweite Teilgetriebe 18a, welches als Mehrgang-Teilgetriebe ausgebildet ist, erhalten. Die Teilgetriebe 17a, 18a werden dabei vormontiert, im Wesentlichen identisch, an dieselbe Position in das Antriebsmodul 10a eingebaut. Es kann daher vorteilhaft, ohne einen Grundaufbau des Antriebsmoduls 10a zu verändern, zwischen verschiedenen Ausstattungsvarianten unterschieden werden (Figur 2, 3, 4).

Die Teilgetriebe 17a, 18a weisen jeweils eine Stirnradverzahnung 42a, 42a' auf. Über die Stirnradverzahnung 42a, 42a' sind die Teilgetriebe 17a, 18a jeweils an das Antriebszahnrad 13a angebunden. Die Stirnverzahnung der Teilgetriebe 17a, 18a kämmt dazu direkt mit dem Antriebszahnrad 13a. Die Teilgetriebe 17a, 18a können daher über die Antriebswelle 13a von der Antriebsmaschine 10a angetrieben werden.

Die Teilgetriebe 17a, 18a weisen, bezogen auf eine Drehachse 25a der Abtriebswelle 15a, einen maximalen Durchmesser d_{T}, d_{T}' bzw. einen maximalen Radius r_{T}, r-_{T}' auf.

Die Stirnradverzahnungen 42a, 42a' der Teilgetriebe 17a, 18a sind besonders vorteilhaft jeweils identisch ausgebildet und weisen insbesondere einen identischen Durchmesser auf. Der Durchmesser der Stirnradverzahnungen 42a, 42a' bildet besonders bevorzugt jeweils den maximalen Durchmesser d_{T} der Teilgetriebe 17a, 18a.

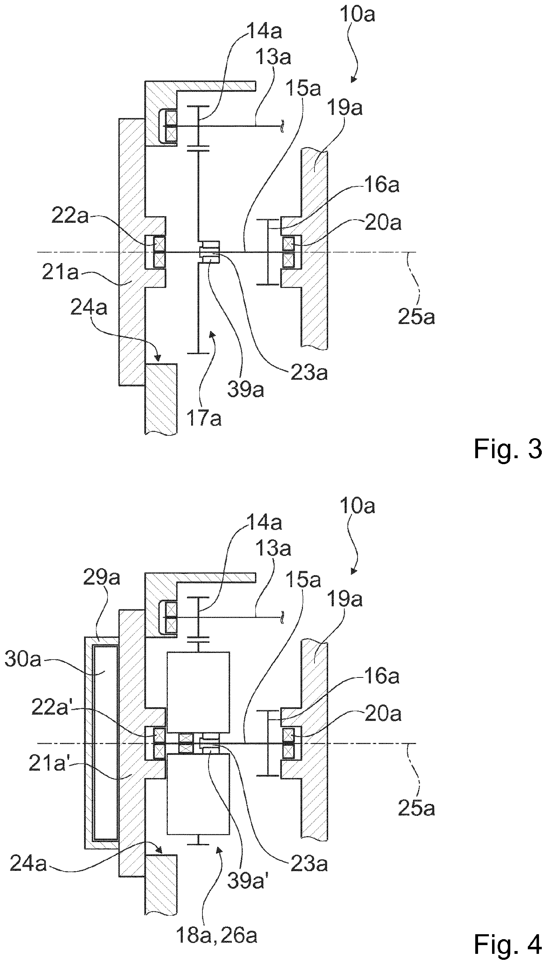

Die Teilgetriebe 17a, 18a weisen besonders vorteilhaft einen gleichen maximalen Durchmesser d_{T} auf. Ferner sind die Teilgetriebe 17a, 18a mit jeweils einem Gehäusedeckel 21a, 21a' verbunden. Jedem Teilgetriebe 17a, 18a ist jeweils einer der Gehäusedeckel 21a, 21a' zugeordnet, mit welchem das Teilgetriebe 17a, 18a montiert wird. Grundsätzlich wäre jedoch auch denkbar, dass lediglich ein separater Gehäusedeckel 21a, 21a' vorgesehen ist (Figur 3, 4).

Die Abtriebswelle 15a weist eine Steckverzahnung 23a zu einer zumindest teilweise drehfesten Anbindung eines der Teilgetriebe 17a, 18a an die Abtriebswelle 15a auf. Die Steckverzahnung 23a ist von einer Außensteckverzahnung gebildet. Die Teilgetriebe 17a, 18a weisen jeweils eine korrespondierende Steckverzahnung 39a, 39a' auf, welche in einem montierten Zustand in Eingriff mit der Steckverzahnung 23a der Abtriebswelle 15a steht. Die Steckverzahnungen 39a, 39a' der Teilgetriebe 17a, 18a sind jeweils von einer Innensteckverzahnung gebildet.

Das erste Teilgetriebe 17a ist von einem 1-Gang-Teilgetriebe gebildet, welches eine feste Übersetzung abbildet. Das erste Teilgetriebe 17a weist eine Stirnradstufe auf. Das erste Teilgetriebe 17a besteht aus einer Stirnradstufe, welche direkt die Stirnradverzahnung 42a, 42a' ausbildet. Das erste Teilgetriebe 17a weist zudem an einem Innenumfang die Steckverzahnung 39a auf. Das erste Teilgetriebe 17a weist daher ein festes Übersetzungsverhältnis auf. Das Antriebsmodul 10a weist mit dem ersten Teilgetriebe 17a ein festes Übersetzungsverhältnis auf.

Das zweite Teilgetriebe 18a ist von einem Mehrgang-Teilgetriebe gebildet, welches zumindest zwei Gänge aufweist. Das Teilgetriebe 18a weist ein Planetengetriebe 26a auf. Das Teilgetriebe 18a bildet ein Planetengetriebe 26a aus und weist einen Planetenradsatz 35a auf. Der Planetenradsatz 35a weist ein Hohlrad 36a, einen Planetenradträger 37a und ein Sonnenrad 38a auf. Ferner umfasst der Planetenradsatz 35a mehrere von dem Planetenradträger 37a auf einer Kreisbahn um das Sonnenrad 38a geführte Planetenräder auf. Das Hohlrad 36a bildet die Stirnradverzahnung 42a des Teilgetriebes 18a aus und kämmt direkt mit dem Antriebszahnrad 14a. Der Planetenradträger 37a ist in einem montierten Zustand permanent drehfest mit der Abtriebswelle 15a verbunden. Der Planetenradträger 37a ist dazu permanent drehfest mit der radial inneren Steckverzahnung 39a' verbunden. Mittels dem zweiten Teilgetriebe 18a können unterschiedliche Übersetzungen realisiert werden. Das Teilgetriebe 18a ist dazu schaltbar ausgeführt. Eine vorteilhafte Aufbaumöglichkeit ist, dass die Abtriebswelle 15a durch den Planetenradsatz 35a hindurchgeführt wird um eine breite Lagerbasis zu generieren. Hierbei werden die Bauteile des Planetenradsatzes 35a auf dieser gelagert. Der Planenradträger 37a wird mittels der Steckverzahnung 39a' mit der Abtriebswelle 15a verbunden. Eine Aktuatorik 30a zur Erzeugung bzw. Durchleitung der Schaltkräfte zu den Schaltelementen ist fest mit dem Gehäusedeckel 21a', der die zweite Lagerstelle 22a' trägt, verbunden (Figur 6).

Das Antriebsmodul 10a weist eine Kupplung 27a auf. Die Kupplung 27a ist zu einem Verblocken von zumindest zwei Getriebeelementen des Planetenradsatzes 35a miteinander vorgesehen. Die Kupplung 27a ist zu einem Verblocken des Hohlrads 36a und des Planetenradträgers 37a vorgesehen. Die Kupplung 27a weist ein erstes Kopplungselement auf, welches permanent drehfest mit dem Hohlrad 36a verbunden ist und ein zweites Kopplungselement, welches permanent drehfest mit dem Planetenradträger 37a verbunden ist. Die Kopplungselemente der Kupplung 27a sind über eine Aktuatorik 30a verbindbar und trennbar. Die Kupplung 27a ist von einem Lamellenschaltelement gebildet. Die Kupplung 27a ist ferner zwischen dem Teilgetriebe 18a und dem Gehäusedeckel 21a' angeordnet. Die Kupplung 27a ist auf einem äußeren Durchmesser des Teilgetriebes 18a angeordnet. Grundsätzlich wäre jedoch auch eine andere, einem Fachmann als sinnvoll erscheinende Anordnung der Kupplung 27a denkbar (Figur 5, 6).

Ferner weist das Antriebsmodul 10a eine Bremse 28a auf. Die Bremse 28a ist von einer Schalteinheit gebildet. Die Bremse 28a ist zu einem Festbremsen zumindest eines Getriebeelements des Teilgetriebes 18a vorgesehen. Die Bremse 28a ist zu einem Bremsen des Sonnenrads 38a des Planetenradsatzes 35a vorgesehen. Die Bremse 28a ist zu einem Festbremsen des Sonnenrads 38a vorgesehen. Die Bremse 28a weist dazu ein erstes, drehbares Kopplungselement auf, welches permanent drehfest mit dem Sonnenrad 38a verbunden ist. Ferner weist die Bremse 28a ein zweites Kopplungselement auf, welches drehfest mit einem Gehäuse, also insbesondere mit dem ersten Gehäuseteil 19a und/oder dem Gehäusedeckel 21a, verbunden ist. Das erste, drehbare Kopplungselement ist in einem geöffneten Zustand der Bremse 28a unabhängig von dem Gehäuse verdrehbar und in einem geschlossenen Zustand mit dem drehfest mit dem Gehäuse verbundenen, zweiten Kopplungselement drehfest verbunden. Die Bremse 28a wird mittels der Aktuatorik 30a betätigt. Die Bremse 28a ist von einer Klauenbremse gebildet. Die Bremse 28a ist ferner zwischen dem Teilgetriebe 18a und dem Gehäusedeckel 21a' angeordnet. Die Bremse 28a ist auf einem inneren Durchmesser des Teilgetriebes 18a angeordnet. Die Bremse 28a ist radial innerhalb der Kupplung 27a angeordnet. Bei einer durchgesteckten Abtriebswelle 15a bietet es sich an, die Bremse 28a zwischen dem Teilgetriebe 18a und dem Gehäusedeckel 21a' anzuordnen. Grundsätzlich wäre jedoch auch eine andere, einem Fachmann als sinnvoll erscheinende Anordnung der Bremse 28a denkbar (Figur 5, 6).

Die Kupplung 27a und die Bremse 28a dienen zu einer Schaltung des Teilgetriebes 18a. Die Betätigung der Kupplung 27a und der Bremse 28a erfolgt über separate Aktoren der Aktuatorik 30a. Die Aktuatorik 30a ist an dem Gehäusedeckel 21a' angeordnet. Das Antriebsmodul 10a weist ein weiteres an dem Gehäusedeckel 21a' angeordnetes Gehäuseteil 29a auf, welches zu einer Aufnahme der Aktuatorik 30a für die Kupplung 27a und die Bremse 28a vorgesehen ist.

Ein erstes Getriebemodul besteht daher aus dem Gehäusedeckel 21a und dem ersten Teilgetriebe 17a, welches als Stirnradstufe ausgebildet ist. Ein zweites Getriebemodul besteht aus dem weiteren Gehäuseteil 29a, der Aktuatorik 30a, dem Gehäusedeckel 21a', der Kupplung 27a, der Bremse 28a und dem zweiten Teilgetriebe 18a, welches als Planetengetriebe 26a ausgebildet ist. Das erste Getriebemodul und das zweite Getriebemodul sind jeweils als vormontierte Baugruppen ausgebildet, welche jeweils in das Antriebsmodul 10a eingesetzt werden können.

Das erste Gehäuseteil 19a weist eine Öffnung 24a auf. Die Öffnung 24a ist in einem montierten Zustand mittels dem Gehäusedeckel 21a, 21a' verschlossen. Ein Öffnungsdurchmesser d_{Ö} der Öffnung 24a ist, senkrecht zu der Drehachse 25a der Abtriebswelle 15a betrachtet, größer als ein Durchmessers d_{T} der Teilgetriebe 17a, 18a. Die Öffnung 24a erstreckt sich in einer Wand des ersten Gehäuseteils 19a koaxial um die Drehachse 25a der Abtriebswelle 15a, und ein Öffnungsradius r_{Ö} der Öffnung 24a um die Drehachse 25a ist größer als ein maximaler Radius r_{T}', r_{T} des Teilgetriebes 17a, 18a beziehungsweise vorzugsweise größer als ein Radius des Abtriebszahnrades 16a um die Drehachse, jedoch nicht mehr als doppelt so groß wie der maximale Radius r_{T}', r_{T} des Teilgetriebes 17a, 18a beziehungsweise als der Radius des Abtriebszahnrades 16a.

Ein minimaler Öffnungsdurchmesser d_{Ö} der Öffnung 24a des Gehäuseteils 19a ist besonders bevorzugt größer als ein maximaler Durchmesser d_{T} der Teilgetriebe 17a, 18a in radialer Richtung. Die Teilgetriebe 17a, 18a passen daher jeweils durch die Öffnung 24a des Gehäuseteils 19a. Ein maximaler Durchmesser d_{T} der Teilgetriebe 17a, 18a in radialer Richtung beträgt bevorzugt zumindest 80% des minimalen Öffnungsdurchmessers d_{Ö} der Öffnung 24a des Gehäuseteils 19a. Das Gehäuseteil 19a ist abgesehen von der Öffnung 24a im Wesentlichen geschlossen. Die Öffnung 24a des ersten Gehäuseteils 19a ist konzentrisch zu der Abtriebswelle 15a angeordnet. Die Öffnung 24a des ersten Gehäuseteils 19a weist eine Runde Grundform auf.

Ein radialer Abstand a einer Verzahnung des Antriebszahnrads 14a zu der Abtriebswelle 15a entspricht maximal einem halben Öffnungsdurchmesser d_{Ö} der Öffnung 24a des Gehäuseteils 19a. Durch Modifikation von Gehäuseteilen bzw. -deckein 19a, 21a, 21a', kann auch bei gleichem Gesamtachsabstand die Einzel- bzw. Gesamtübersetzung eingestellt werden.

Vorzugsweise ist eine Lagerstellt 43a zu einer Lagerung des Antriebszahnrades 14 an dem ersten Gehäuseteil 19a und benachbart zu der Öffnung 24a des ersten Gehäuseteils 19a angeordnet.

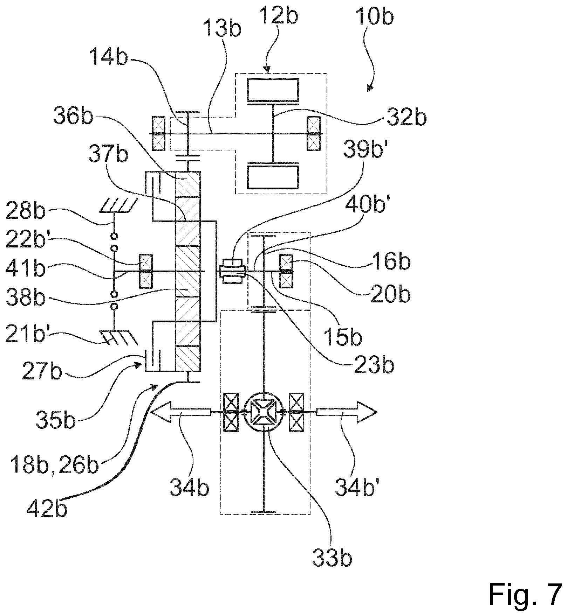

In den Figuren 7 bis 9 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 6, verwiesen werden kann. Zur Unterscheidung der Ausführungsbeispiele ist der Buchstabe a in den Bezugszeichen des Ausführungsbeispiels der Figuren 1 bis 6 durch die Buchstaben b bis d in den Bezugszeichen der Ausführungsbeispiele der Figuren 7 bis 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 6, verwiesen werden.

Figur 7 zeigt ein Antriebsmodul 10b. Das Antriebsmodul 10b weist eine Antriebsmaschine 12b auf. Ferner weist das Antriebsmodul 10b eine mit der Antriebsmaschine 12b gekoppelte Antriebswelle 13b auf. Die Antriebswelle 13b ist direkt mit der Antriebsmaschine 12b gekoppelt. Das Antriebsmodul 10b weist ferner ein drehfest auf der Antriebswelle 13b angeordnetes Antriebszahnrad 14b auf. Das Antriebszahnrad 14b ist permanent drehfest mit der Antriebswelle 13b verbunden. Des Weiteren weist das Antriebsmodul 10b eine Abtriebswelle 15b auf. Die Abtriebswelle 15b ist beidseitig gelagert ausgeführt. Das Antriebsmodul 10b weist ferner ein drehfest auf der Abtriebswelle 15b angeordnetes Abtriebszahnrad 16b auf. Ferner ist die Abtriebswelle 15b zweiteilig ausgeführt. Die beiden Teile 40b, 41b der Abtriebswelle 15b sind koaxial zueinander angeordnet, jedoch voneinander getrennt. Die beiden Teile 40b, 41b der Abtriebswelle 15b sind relativ zueinander verdrehbar. Die Abtriebswelle 15b weist ferner eine Steckverzahnung 23b zu einer zumindest teilweise drehfesten Anbindung eines Teilgetriebes 18b an die Abtriebswelle 15b auf. Ein erster Teil 40b der Abtriebswelle 15b weist die Steckverzahnung 23b auf.

Das Antriebsmodul 10b weist ferner einen ersten Gehäuseteil 19b auf. Das Gehäuseteil 19b bildet einen wesentlichen Teil eines Gehäuses des Antriebsmoduls 10b. Das Gehäuseteil 19b weist eine erste Lagerstelle 20b zu einer Lagerung der Abtriebswelle 15b auf. Die erste Lagerstelle 20b ist zu einer Lagerung eines ersten Teils der Abtriebswelle 15b vorgesehen. Ferner weist das Antriebsmodul 10b einen von dem ersten Gehäuseteil 19b getrennt ausgebildeten Gehäusedeckel 21b, 21a' auf. Der Gehäusedeckel 21b, 21a' weist eine zweite Lagerstelle 22b zu einer Lagerung der Abtriebswelle 15b auf. Die zweite Lagerstelle 22b ist zu einer Lagerung eines zweiten Teils der Abtriebswelle 15b vorgesehen.

Das Antriebsmodul 10b weist ferner ein Teilgetriebe 18b auf. Das Teilgetriebe 18b bildet ein Planetengetriebe 26b aus und weist einen Planetenradsatz 35b auf. Der Planetenradsatz 35b weist ein Hohlrad 36b, einen Planetenradträger 37b und ein Sonnenrad 38b auf. Ferner umfasst der Planetenradsatz 35b mehrere von dem Planetenradträger 37b auf einer Kreisbahn um das Sonnenrad 38b geführte Planetenräder auf. Das Hohlrad 36b bildet die Stirnradverzahnung 42b des Teilgetriebes 18b aus und kämmt direkt mit dem Antriebszahnrad 14b. Der Planetenradträger 37b ist in einem montierten Zustand permanent drehfest mit dem ersten Teil 40b der Abtriebswelle 15b verbunden. Der Planetenradträger 37b ist dazu permanent drehfest mit einer radial inneren Steckverzahnung 39a' verbunden. Das Sonnenrad 38b ist permanent drehfest mit dem zweiten Teil 41b der Abtriebswelle 15b verbunden.

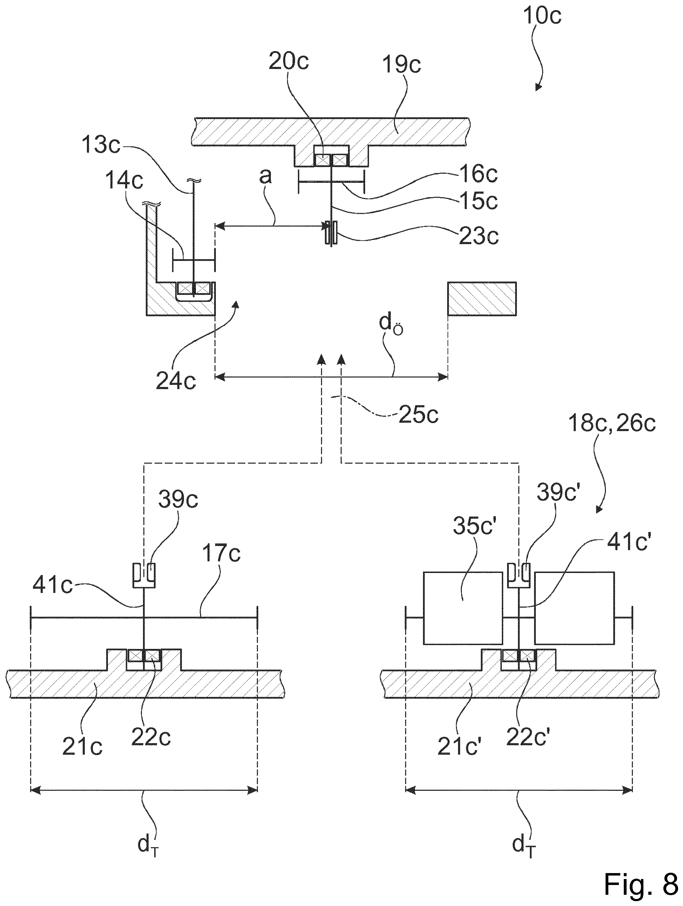

Figur 8 zeigt ein Antriebsmodul 10c. Das Antriebsmodul 10c weist eine Antriebsmaschine 12c auf. Ferner weist das Antriebsmodul 10c eine mit der Antriebsmaschine 12c gekoppelte Antriebswelle 13c auf. Die Antriebswelle 13c ist direkt mit der Antriebsmaschine 12c gekoppelt. Das Antriebsmodul 10c weist ferner ein drehfest auf der Antriebswelle 13c angeordnetes Antriebszahnrad 14c auf. Das Antriebszahnrad 14c ist permanent drehfest mit der Antriebswelle 13c verbunden. Des Weiteren weist das Antriebsmodul 10c eine Abtriebswelle 15c auf. Die Abtriebswelle 15c ist beidseitig gelagert ausgeführt. Das Antriebsmodul 10c weist ferner ein drehfest auf der Abtriebswelle 15c angeordnetes Abtriebszahnrad 16c auf. Ferner ist die Abtriebswelle 15c zweiteilig ausgeführt. Die beiden Teile 40c, 41c, 41c' der Abtriebswelle 15c sind koaxial zueinander angeordnet, jedoch voneinander getrennt. Die beiden Teile 40c, 41c, 41c' der Abtriebswelle 15c sind in einem montierten Zustand drehfest miteinander verbunden. Die Abtriebswelle 15c weist ferner eine Steckverzahnung 23c zu einer zumindest teilweise drehfesten Anbindung eines Teilgetriebes 18c an die Abtriebswelle 15c auf. Ein erster Teil 40c der Abtriebswelle 15c weist die Steckverzahnung 23c auf. Ferner weist der zweite Teil 41c, 41c' der Abtriebswelle 15c eine korrespondierende Steckverzahnung 39c, 39c' auf, welche in einem montierten Zustand in Eingriff mit der Steckverzahnung 23c des ersten Teils 40c der Abtriebswelle 15c steht. Das Antriebsmodul 10c weist ferner zumindest ein Teilgetriebe 17c, 18c auf. Das Antriebsmodul 10c weist zwei alternative Teilgetriebe 17c, 18c auf. Der zweite Teil 41c, 41c' der Abtriebswelle 15c bildet jeweils einen Teil der Teilgetriebe 17c, 18c.

Eine Anbindung der Teilgetriebe 17c, 18c erfolgt daher mittels der Steckverzahnung 39c, 39c' und der Steckverzahnung 23c der Abtriebswelle 15c, um die Teilgetriebe 17c, 18c und die Abtriebswelle 15d koaxial zu verbinden. Diese Verbindungsmöglichkeit erfordert je nach Ausgestaltung gegebenenfalls eine zusätzliche Lagerstelle auf der Abtriebswelle. Bei dem ersten Teilgetriebe 17c ist dabei eine Baugruppe mit einem Gehäusedeckel 21c und dem Teilgetriebe 17c, welches als eine einfache Stirnradstufe ausgebildet ist, nötig, bei dem zweiten Teilgetriebe 18c, welches als ein schaltbares Getriebe ausgebildet ist, ist dagegen eine Baugruppe mit einer Aktuatorik, einem Gehäusedeckel 21c' und dem zweiten Teilgetriebe 18c nötig. Hier erfolgt die Lagerung des 1-Gang-/Mehrgangmoduls auf einer Seite im Gehäusedeckel 21c, 21c'.

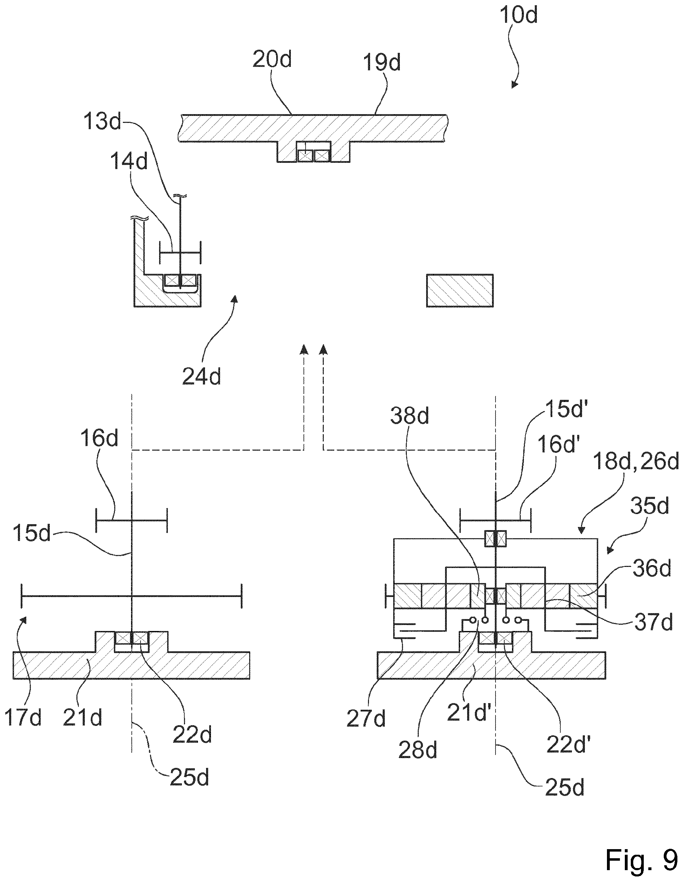

Figur 9 zeigt ein Antriebsmodul 10d. Das Antriebsmodul 10d weist eine Antriebsmaschine 12d auf. Ferner weist das Antriebsmodul 10d eine mit der Antriebsmaschine 12d gekoppelte Antriebswelle 13d auf. Die Antriebswelle 13d ist direkt mit der Antriebsmaschine 12d gekoppelt. Das Antriebsmodul 10d weist ferner ein drehfest auf der Antriebswelle 13d angeordnetes Antriebszahnrad 14d auf. Das Antriebszahnrad 14d ist permanent drehfest mit der Antriebswelle 13d verbunden. Des Weiteren weist das Antriebsmodul 10d eine Abtriebswelle 15d, 15d' auf. Die Abtriebswelle 15d, 15d' ist beidseitig gelagert ausgeführt. Das Antriebsmodul 10d weist ferner zumindest ein Teilgetriebe 17d, 18d auf. Das Antriebsmodul 10d weist zwei alternative Teilgetriebe 17d, 18d auf. Die Teilgetriebe 17d, 18d sind jeweils fest mit einer Abtriebswelle 15d, 15d' verbunden. Die Abtriebswelle 15d, 15d' wird daher gemeinsam mit dem jeweiligen Teilgetriebe 17d, 18d eingesetzt. Die Abtriebswelle 15d, 15d' wird bei einer Montage dazu in eine erste Lagerstelle 20d eines ersten Gehäuseteils 19d eingesteckt.

Hierbei findet eine Baugruppenwahl mittels einem Kompletttauschmodul statt, das die Abtriebswelle 15d, 15d' einschließt. Damit kann wahlweise ein 1-Gang oder ein Mehrgang dargestellt werden. Hierbei ist die Abtriebswelle 15d, 15d' auf der einen Seite in einem Gehäusedeckel 21d, 21d' gelagert. Im Falle des Mehrgangmoduls wird dieses wiederum auf der Abtriebswelle 15d, 15d' gelagert. Hierbei kann es zu Fertigungs- und/oder Packagevorteilen kommen, da die einheitliche Steckverzahnung auf der Abtriebswelle 15d, 15d' entfällt. Auch die Verbindung eines Planetenradträgers 37d des zweiten Teilgetriebes 18a mit der Abtriebswelle 15d' kann konstruktiv freier erfolgen.

### Bezugszeichenliste

- 10: Antriebsmodul
- 11: Kraftfahrzeug
- 12: Antriebsmaschine
- 13: Antriebswelle
- 14: Antriebszahnrad
- 15: Abtriebswelle
- 16: Abtriebszahnrad
- 17: Teilgetriebe
- 18: Teilgetriebe
- 19: Gehäuseteil
- 20: erste Lagerstelle
- 21: Gehäusedeckel
- 22: zweite Lagerstelle
- 23: Steckverzahnung
- 24: Öffnung
- 25: Drehachse
- 26: Planetengetriebe
- 27: Kupplung
- 28: Bremse
- 29: Gehäuseteil
- 30: Aktuatorik
- 31: Antriebsrad
- 32: Rotor
- 33: Achsgetriebe
- 34: Seitenwelle
- 35: Planetenradsatz
- 36: Hohlrad
- 37: Planetenradträger
- 38: Sonnenrad
- 39: Steckverzahnung
- 40: Teil
- 41: Teil
- 42: Stirnradverzahnung
- 43: dritte Lagerstelle
- d_{T}: Durchmesser
- d_{Ö}: Öffnungsdurchmesser
- a: Abstand
- r_{T}: Radius des Teilgetriebes
- r_{Ö}: Radius der Öffnung

## Patentansprüche

1. Antriebsmodul für ein Kraftfahrzeug (11a), mit zumindest einer elektrischen Antriebsmaschine (12a; 12b), mit einer permanent drehfest mit einem Rotor (32) der elektrischen Antriebsmaschine (12a; 12b) gekoppelten Antriebswelle (13a-d),
- mit einem drehfest auf der Antriebswelle (13a-d) angeordneten Antriebszahnrad (14a-d),
- mit einer Abtriebswelle (15a-d),
- mit einem koaxial zu der Abtriebswelle (15a-d, 15d') angeordneten Teilgetriebe (17a, 18a; 18b; 17c, 18c; 17d, 18d), das eine koaxial zu der Abtriebswelle (15a-d, 15d') angeordnete Stirnradverzahnung (42a, 42a') sowie ein koaxial zu der Abtriebswelle (15a-d, 15d') angeordnetes Abtriebszahnrad (16a-d) aufweist, wobei die Stirnradverzahnung (42a, 42a') mit dem Antriebszahnrad (14a-d) in Eingriff steht,
- und mit einem ersten Gehäuseteil (19a; 19c; 19d), das eine erste Lagerstelle (20a-d) zu einer Lagerung der Abtriebswelle (15a-d, 15d') aufweist,
- und mit einem von dem ersten Gehäuseteil (19a; 19c; 19d) getrennt ausgebildeten Gehäusedeckel (21a, 21a'; 21c, 21c'; 21d, 21d'), welcher eine zweite Lagerstelle (22a, 22a'; 22c, 22c'; 22d, 22d') zu einer Lagerung der Abtriebswelle (15a-d, 15d') aufweist,
- wobei der Gehäusedeckel (21a, 21a'; 21c, 21c'; 21d, 21d') eine Öffnung (24a; 24c; 24d) in dem ersten Gehäuseteil (19a; 19c; 19d) vollständig abdeckt,
**dadurch gekennzeichnet, dass**
- die Öffnung (24a; 24c; 24d) einen um die Drehachse der Abtriebswelle koaxial angeordneten kreisförmigen freien Bereich aufweist und sich der kreisförmige freie Bereich konzentrisch um eine Drehachse (25a-d) der Abtriebswelle (15a-d) erstreckt,
- und ein Öffnungsradius (r_{Ö}) der Öffnung (24a; 24c; 24d) um die Drehachse (25a-d) größer ist als ein maximaler Radius (r_{T}', r_{T}) des Teilgetriebes (17a, 18a; 18b; 17c, 18c; 17d, 18d), jedoch dass der Öffnungsradius (r_{Ö}) nicht mehr als doppelt so groß wie der maximale Radius (r_{T}', r_{T}) des Teilgetriebes (17a, 18a; 18b; 17c, 18c; 17d, 18d) ist,
wobei eine Bremse (28a; 28b; 28d) vorgesehen ist, welche zwischen dem Teilgetriebe (18a-d) und dem Gehäusedeckel (21a'; 21c'; 21d') angeordnet ist.

2. Antriebsmodul nach Anspruch 1,
**dadurch gekennzeichnet, dass**
die Abtriebswelle (15a-c) eine Steckverzahnung (23a-c) zu einer drehfesten Anbindung des Teilgetriebes (17a, 18a; 18b; 17c, 18c; 17d, 18d) an die Abtriebswelle (15a-c) aufweist.

3. Antriebsmodul nach einem der vorhergehenden Ansprüche,
**dadurch gekennzeichnet, dass**
das Teilgetriebe (18a-d) ein schaltbares Getriebe mit zumindest zwei Übersetzungen aufweist, wobei eine Aktuatorik (30a) für das schaltbare Getriebe an einer dem Teilgetriebe (18a-d) abgewandten Außenseite des Gehäusedeckels (21a') angeordnet ist.

4. Antriebsmodul nach Anspruch 3,
**dadurch gekennzeichnet, dass**
das Teilgetriebe (18a-d) ein Planetengetriebe (26a-d) aufweist.

5. Antriebsmodul nach einem der vorhergehenden Ansprüche,
**gekennzeichnet durch**
eine Kupplung (27a; 27b; 27d), welche zwischen dem Teilgetriebe (18a-d) und dem Gehäusedeckel (21a'; 21c'; 21d') angeordnet ist.

6. Antriebsmodul nach einem der vorhergehenden Ansprüche,
**dadurch gekennzeichnet, dass**
das erste Gehäuseteil (19) eine dritte Lagerstelle (43a) aufweist, welche zu einer Lagerung des Antriebszahnrades (14) vorgesehen ist und welche benachbart zu der Öffnung (24a) angeordnet ist.

7. Antriebsmodul nach einem der vorhergehenden Ansprüche,
**dadurch gekennzeichnet, dass**
das Abtriebszahnrad (16 a-d) axial zwischen dem Teilgetriebe (17a, 18a) und der ersten Lagerstelle (20a-d) angeordnet ist.

8. Kraftfahrzeug mit einem Antriebsmodul (10a-d) nach einem der vorhergehenden Ansprüche.

## Claims

1. Drive module for a motor vehicle (11a), comprising at least one electrical drive machine (12a; 12b), comprising a driving shaft (13a-d) that is permanently coupled to a rotor (32) of the electrical drive machine (12a; 12b) for conjoint rotation therewith,
- comprising a driving gearwheel (14a-d) arranged on the driving shaft (13a-d) for conjoint rotation therewith,
- comprising a driven shaft (15a-d),
- comprising a sub-transmission (17a, 18a; 18b; 17c, 18c; 17d, 18d), which is arranged coaxially with the driven shaft (15a-d, 15d') and which comprises spur gear teeth (42a, 42a') arranged coaxially with the driven shaft (15a-d, 15d') as well as a driven gearwheel (16a-d) arranged coaxially with the driven shaft (15a-d, 15d'), wherein the spur gear teeth (42a, 42a') are engaged with the driving gearwheel (14a-d),
- and comprising a first housing portion (19a; 19c; 19d), which comprises a first bearing point (20a-d) for bearing the driven shaft (15-d, 15d'),
- and comprising a housing cover (21a, 21a'; 21c, 21c'; 21 d, 21d'), which is designed to be separate from the first housing portion (19a; 19c; 19d) and which comprises a second bearing point (22a, 22a'; 22c, 22c'; 22d, 22d') for bearing the driven shaft (15a-d, 15d'),
- wherein the housing cover (21a, 21a'; 21c, 21c'; 21d, 21d') completely covers an opening (24a; 24c; 24d) in the first housing portion (19a; 19c; 19d), **characterised in that**
- the opening (24a; 24c; 24d) comprises a circular free region arranged coaxially around the axis of rotation of the driven shaft and the circular free region extends concentrically around an axis of rotation (25a-d) of the driven shaft (15a-d),
- and an opening radius (r_{ö}) of the opening (24a; 24c; 24d) around the axis of rotation (25a-d) is larger than a maximum radius (r_{T}', r_{T}) of the sub-transmission (17a, 18a; 18b; 17c, 18c; 17d, 18d), however the opening radius (r_{ö}) is no more than twice as large as the maximum radius (r_{T}', r_{T}) of the sub-transmission (17a, 18a; 18b; 17c, 18c; 17d, 18d),
wherein a brake is provided (28a; 28b; 28d), which is arranged between the sub-transmission (18a-d) and the housing cover (21a'; 21c'; 21d').

2. Drive module according to claim 1,
**characterised in that**
the driven shaft (15a-c) comprises splines (23a-c) for connecting the sub-transmission (17a, 18a; 18b; 17c, 18c; 17d, 18d) to the driven shaft (15a-c) for conjoint rotation therewith.

3. Drive module according to any of the preceding claims,
**characterised in that**
the sub-transmission (18a-d) comprises a shiftable transmission having at least two ratios, wherein an actuation system (30a) for the shiftable transmission is arranged on an outer face of the housing cover (21a') facing away from the sub-transmission (18a-d).

4. Drive module according to claim 3,
**characterised in that**
the sub-transmission (18a-d) comprises a planetary transmission (26a-d).

5. Drive module according to any of the preceding claims,
**characterised by**
a clutch (27a; 27b; 27d), which is arranged between the sub-transmission (18a-d) and the housing cover (21a'; 21c'; 21d').

6. Drive module according to any of the preceding claims,
**characterised in that**
the first housing portion (19) comprises a third bearing point (43a), which is provided for bearing the driving gearwheel (14) and which is arranged adjacent to the opening (24a).

7. Drive module according to any of the preceding claims,
**characterised in that**
the driven gearwheel (16a-d) is arranged axially between the sub-transmission (17a, 18a) and the first bearing point (20a-d).

8. Motor vehicle comprising a drive module (10a-d) according to any of the preceding claims.

## Revendications

1. Module d'entraînement pour un véhicule à moteur (11a), comprenant au moins un moteur électrique (12a, 12b), avec un arbre d'entraînement (13a-d) couplé solidaire en rotation à un rotor (32) du moteur électrique (12a, 12b),
- avec un pignon d'attaque (14a-d) disposé solidaire en rotation sur l'arbre d'entraînement (13a-d),
- avec un arbre mené (15a-d),
- avec un engrenage de commande de rotation (17a, 18a, 18b, 17c, 18c, 17d, 18d) disposé coaxialement par rapport à l'arbre mené (15a-d, 15d'), qui comporte une denture droite (42a, 42a') disposée coaxialement par rapport à l'arbre mené (15a-d, 15d') ainsi qu'un pignon mené (16a-d) disposé coaxialement par rapport à l'arbre mené (15a-d, 15d'), la denture droite (42a, 42a') s'engrenant avec le pignon d'attaque (14a-d),
- et avec une première partie de boîtier (19a, 19c, 19d), qui présente un premier logement (20a-d) par rapport à un emplacement de l'arbre mené (15a-d, 15d'),
- et avec un couvercle de boîtier (21a, 21a', 21c, 21c', 21d, 21d') séparé de la première partie de boîtier (19a, 19c, 19d), lequel présente un deuxième logement (22a, 22a', 22c, 22c', 22d, 22d') servant à loger l'arbre mené (15a-d, 15d'),
- le couvercle de boîtier (21a, 21a', 21c, 21c', 21d, 21d'), recouvrant entièrement une ouverture (24a, 24c, 24d) dans la première partie de boîtier (19a, 19c, 19d), **caractérisé en ce que**
- l'ouverture (24a, 24c, 24d) présente une zone libre annulaire ménagée coaxialement autour de l'axe de rotation de l'arbre mené et la zone libre annulaire s'étend concentriquement autour d'un axe de rotation (25a-d) de l'arbre mené (15a-d),
- et un rayon d'ouverture (r_{ö}) de l'ouverture (24a, 24c, 24d) autour de l'axe de rotation (25d) est supérieur à un rayon maximal (rr, r_{T}) de l'engrenage de commande de rotation (17a, 18a, 18b, 17c, 18c, 17d, 18d), cependant le rayon d'ouverture (r_{ö}) n'est pas plus deux fois grand que le rayon maximal (rr, r_{T}) de l'engrenage de commande de rotation (17a, 18a, 18b, 17c, 18c, 17d, 18d),
- un frein (28a, 28b, 28d) étant disposé entre l'engrenage de commande de rotation (18a-d) et le couvercle de boîtier (21a', 21c', 21d').

2. Module d'entraînement selon la revendication 1, **caractérisé en ce que** l'arbre mené (15a-c) comprend une cannelure d'emmanchement (23a-c) pour permettre une liaison solidaire en rotation de l'engrenage de commande de rotation (17a, 18a, 18b 17c, 18c, 17d, 18d) à l'arbre mené (15a-c).

3. Module d'entraînement selon l'une quelconque des revendications précédentes, **caractérisé en ce que** l'engrenage de commande de rotation (18a-d) présente une transmission commutable avec au moins deux rapports, un actionneur (30a) pour la transmission commutable étant disposé sur un côté extérieur opposé de l'engrenage de commande de rotation (18a-d) du couvercle de boîtier (21a').

4. Module d'entraînement selon la revendication 3, **caractérisé en ce que** l'engrenage de commande de rotation (18a-d) comporte une boîte de vitesses à trains épicycloïdaux (26a-d).

5. Module d'entraînement selon l'une quelconque des revendications précédentes, **caractérisé par** un embrayage (27a, 27b, 27d) qui est disposé entre l'engrenage de commande de rotation (18a-d) et le couvercle de boîtier (21a, 21c', 21d').

6. Module d'entraînement selon l'une quelconque des revendications précédentes, **caractérisé en ce que** la première partie de boîtier (19) présente un troisième logement (43a) qui sert à loger le pignon d'attaque (14) et qui est adjacent à l'ouverture (24a).

7. Module d'entraînement selon l'une quelconque des revendications précédentes, **caractérisé par** le pignon mené (16a-d) est disposé axialement entre l'engrenage de commande de rotation (17a, 18a) et le premier logement (20a-d).

8. Véhicule à moteur comprenant le module d'entraînement (10a-d) selon l'une quelconque des revendications précédentes.
